# EUROPEAN PATENT APPLICATION

(11) **EP 1 795 315 A1**
(43) Date of publication of application: **13.06.2007**
(21) Application number: 06114783.1
(22) Date of filing: 31.05.2006
(51) Int. Cl.: B25J 13/06

(54) **Hand-held control device for an industrial robot**

(71) Applicant: ABB RESEARCH LTD., 8050 Zürich (CH)
(72) Inventor: Lundberg, Ivan, 722 28 Västeras (SE); Strand, Martin, 722 46 Västeras (SE); Masek, Vlastimil, St. John's, NL, A1A 2A1 (CA)
(74) Representative: Reyier, Ann-Mari

(57) **Abstract**

The invention relates to a hand-held control device (12) for an industrial robot (10) comprising a manual input unit (22) for controlling the movement of the robot such that the movement of the robot corresponds to the movement of the input unit, wherein a first coordinate system (X₁,Y₁,Z₁) is defined relative to the control device such that it follows the movement of the control device, and a second coordinate system (X₂, Y₂, Z₂) is defined fixed to the robot, and the movements of the manual input unit are measured in the first coordinate system. The device further comprises a determining unit including a sensor (24) for determining the relative orientation between the first and the second coordinate system, and a calculating unit adapted to calculate the transformation between the first and second coordinate system based on the relative orientation between the coordinate systems, and to transform the movements of the manual input unit into corresponding movements in the second coordinate system based on said calculated transformation.

## Description

### TECHNICAL FIELD

The present invention concerns a hand-held control device for manually controlling the movements of an industrial robot. The present invention also relates to method for manually control the movements of an industrial robot by using such a hand-held control device.

### BACKGROUND ART

Manually controlled movement of an industrial robot is used for applications such as adjusting the position of the robot parts in real time or during a programming stage. Manually controlled movement is often performed with the aid of a hand-held control device, also called Teach Pendant Unit (TPU). The hand-held control device comprises a robot position controlling unit, hereafter called a manual input device, such as joystick or a touch pad. When programming the industrial robot, the robot is taught by the aid of the manual input device to follow an operating path defined by a number of set points. An operator moves the joystick in different directions dependent on which directions he wants the robot to move in. To get a better view of the robot and a potential work object, for instance, an operator normally moves around the robot while programming. When the operator is moving around the robot in different directions he also turns the hand-held control device in different directions and it is therefore difficult for the operator to keep track of the orientation of the robot in relation to the movement of the manual input device and the movement of the input device.

One way of simplifying manual movement and programming is to attach an input device to a robot part and then drag the robot part around. This solution has the common problem that although it is a very intuitive method it is also inherently unsafe, since the operator must be very close to the robot. Other problems are reachability for large robots because an operator can not move the robot part much higher then 2m without stepping up on a ladder. Further the operator is in the way of the robot when the operator is trying to reach a desired target in a work object.

It is an object of the present invention to provide an improved hand-held control device for manual control of the movements of an industrial robot in a simple and cost-effective way.

### SUMMARY OF THE INVENTION

In a first aspect this object is fulfilled by using a hand-held control device having the features of claim 1.

Such a hand-held control device for an industrial robot comprises a manual input unit for controlling the movement of the robot such that the movement of the robot corresponds to the movement of the input unit. A first coordinate system is defined relative to the control device such that it follows the movement of the control device, and a second coordinate system is defined fixed to the robot, and the movements of the manual input unit are measured in the first coordinate system. The hand-held control device further comprises a determining unit for determining the relative orientation between the first and the second coordinate system. The hand-held control device also further comprises a calculating unit adapted to calculate the transformation between the first and second coordinate system based on the relative orientation between the coordinate systems, and to transform the movements of the manual input unit into corresponding movements in the second coordinate system based on said calculated transformation.

In this context the transformation is only transforms the orientation or direction of the movement of the manual input unit. The size of the movement is not transformed.

The effect obtained by this invention is that when the operator moves the input device the robot will move in the same direction as the input device, regardless of how the hand-held control device is re-oriented. The input device is, for instance, a joystick or a space ball. The invention makes it possible for the operator to disregard which directions the axes in the first coordinate system have, because it is automatically determined by the hand-held control device. When manipulating the manipulator the operator looks at the robot and moves the input device in the current direction he wants the robot to move in the second coordinate system. The robot will then follow the chosen direction, which is the same direction as the input device moves in the second coordinate system.

The present invention provides an intuitive and easy method of manually moving or programming a robot. The present invention combines the safety of conventional ways of programming robots with a TPU with flexibility. The invention solves the safety problems, reachability problems and line of sight problems associated with drag-robot solutions, because it is made possible for the operator to look at the robot while manipulating the robot and to manipulate the robot outside the boundaries of the reachable area of the robot.

The invention has also made it possible for the operator to move around freely in the cell to get the best possible view of the robot/work-object without considering how the hand-held control device is oriented relative the robot.

According to another embodiment of the invention said determining unit comprises a sensor device for sensing the orientation of the first coordinate system in at least two degrees of freedom. In a preferred embodiment said determining unit comprises a sensor device for sensing the orientation of the first coordinate system in three degrees of freedom. This allows the control system to receive information regarding how the first coordinate system is reoriented.

According to yet another embodiment of the invention said determining unit is adapted to determine the relative orientation between the first and the second coordinate system based on orientation measurements from said sensor device. This allows the control system to calculate how the hand-held control device moves in the second control system, because the first coordinate system is defined relative to the hand-held control device.

According to another embodiment of the invention said input unit is arranged to detect user input in at least five degrees of freedom. As the input unit may be any type of input unit, such as a joystick, space ball/mouse or steering pad, or other steering device from one degree of freedom to six degrees of freedom (DOF). This makes it possible for the operator to envision having his hand on an axis of the robot. This is an advantage because it is an easy and intuitive solution to manually move the robot in any direction/orientation, especially when combined with a five DOF or six DOF space ball. To manually move the robot in any direction/orientation he simply moves his hand over the six DOF space ball as he would have moved his hand if he was dragging the robot around.

For example, a space ball is an input device for the six DOF control of robot tools as developed by the DRY (German Aerospace Research Establishment) Institute for robotics and mechatronics. Such an input device comprises a six-axis force torque sensor, which means three forces and three torque components, arranged in a hollow plastic ball. Such a space mouse/ball registers linear and rotational displacement as generated by the forces/torques of a human hand, which are then computationally transformed into translational/rotational motion speeds. Small movements such as 0.01 mm may be detected if such a torque sensor is used. For instance three accelerometers and three gyroscopes are used in the above embodiment, but other combinations of a number of accelerometers and gyros are also possible within the principles disclosed by this invention. Computational means such as a microprocessor, a computer or the like is required in order to perform signal processing and determination of the relative orientation between the first and the second coordinate system.

According to another embodiment of the invention the sensor device is an inertial navigation device. An inertial navigation device (IND) is adapted to estimate position and orientation of the hand-held control device 12. An inertial navigation device uses accelerometers and gyroscopes to track the earth's gravity field as well as the magnetic field of the earth with a compass. This allows an accurate and cost-effective measurement of orientation, especially in a three degrees of freedom solution.

In this context an inertial navigation device (IND) is adapted to estimate the orientation of the hand-held control device 12. An inertial navigation device uses accelerometers and gyroscopes to track the earth's gravity field as well as the magnetic field of the earth with a compass. This allows an accurate and cost-effective three DOF measurement of orientation. The accelerometers and gyroscopes are preferably very small but accurate devices, built for example using micro electromechanical systems (MEMS) technology applied, for example, in chip or wafer-type fabrication processes for silicon components. Additional accuracy may be obtained by adding a magnetometer or three-axis magnetometer. As an alternative piezo-based gyros may be used when combined with due care and adaption to take account of the relatively lesser accuracy of those devices, as compared to MEMS devices.

The IND typically comprises three accelerometers adapted to detect acceleration and retardation in three DOF, three planes, preferably being orthogonal with respect to each other, as well as three gyros to give rotation about three orthogonal axes. This linear and angular data are fed into an IND processor and memory unit for estimation of position and orientation of the IND in 6 degrees of freedom.

According to yet another embodiment of the invention of the hand-held control device said input unit is a space ball. This is an advantage because it is an easy and intuitive solution to manually move the robot in any direction/orientation. The operator simply moves his hand over the six DOF space ball as he would have moved his hand if he was dragging the robot around.

A second object of the present invention is to provide an improved method for manually controlling the movements of an industrial robot by using such a hand-held control device.

This object is fulfilled using a method having the features of claim 8.

A method for manual control of an industrial robot, comprising a control device having a manual input unit for controlling the movement of the robot such that the movements of the robot corresponds to the movement of the input unit, wherein a first coordinate system is defined relative to the control device such that it follows the movements of the control device, and a second coordinate system are defined fixed to the robot, and the movements of the manual input unit are defined in the first coordinate system: The method repeatedly performs the steps of:
- determining the relative orientation between the first and the second coordinate system,
- calculating the transformation between the first and second coordinate system based on the relative orientation between the coordinate systems, and
- transforming the movements of the manual input unit into corresponding movements in the second coordinate system based on said calculated transformation.

This method provides an intuitive and easy method of manually moving or programming a robot.

Further advantages as well as advantageous features of the invention appear from the following description and the other dependent claims.

### BRIEF DESCRIPTION OF THE DRAWINGS

The present invention will be described in more detail in connection with the enclosed schematic drawings.
- Figure 1: shows an arrangement of a hand-held control device according to an embodiment of the invention and an industrial robot,
- Figure 2: shows a simplified block diagram of the hand-held control device, and
- Figure 3: shows a simplified flowchart according to an embodiment of the invention.

It should be noted that the figures are not drawn to scale and that the size of certain features has been exaggerated for the sake of clarity.

The following description and drawings are not intended to limit the present invention to the embodiment disclosed. The embodiment disclosed merely exemplifies the principles of the present invention.

### DESCRIPTION OF THE PREFERRED EMBODIMENTS

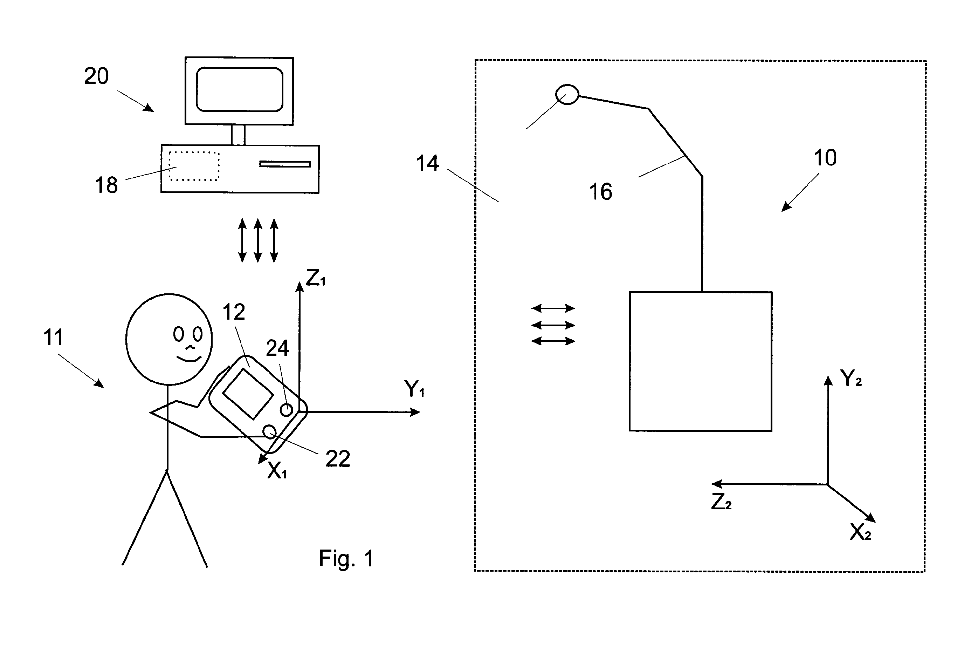

Figure 1 shows an arrangement of an industrial robot 10 manipulated by an operator 11 using a hand-held control device 12. The industrial robot 10 is in this case arranged in an industrial robot cell 14. A robot operator 11 is standing outside the robot cell 14. It is to be understood that the operator 11 also can operate the robot 10 from inside the robot cell 14.

An industrial robot 10 comprises a manipulator 16 and a control system 18 for controlling the movements of the manipulator 16. The control system 18 is located in an external computer 20, in this case. The control system 18 can also be located in computational means in the control device 12 and/or in the manipulator 16. The manipulator 16 is adapted to be programmed to execute a plurality of tasks. During manual movement and programming of the robot 10, the robot operator 11 communicates with the control system 18 via the hand-held control device 12. The operator 11 inputs commands to the control system 18, for example, for starting and stopping a program, or for moving the manipulator 16 to a desired position. The control system 18 further comprises path planning means for calculating how the manipulator 16 should move so as to be able to execute the programmed tasks.

The hand-held control device 12 is used both for manually manipulating and programming the robot 10. The hand-held control device 12 comprises a manual input unit 22 which is adapted to communicate with the control system 18. The manual input unit 22 is used for controlling the movement of the robot 10. The hand-held control device 12 also comprises a communication unit to communicate with the control program. The industrial robot 10 is adapted to move in correspondence to the movement of the input unit 22.

The workspace of the manipulator 16 has to be defined in order to move the manipulator 16 between different positions in the workspace in a controlled manner when manually moving or programming the robot 10. These positions in the workspace of the robot 10 are defined by using a coordinate system, for instance, a Cartesian coordinate system, having an origin and the directions of the axes defined in relation to the robot 10 or the control device. Manipulators are usually adapted to be manoeuvred in up to six degrees of freedom (DOF), which in this case means three translational degrees of freedom represented by the X,Y,Z-axis and three rotational degrees of freedom represented by rotations round the X,Y,Z-axis.

In this case a first coordinate system X₁,Y₁,Z₁ is defined relative to the hand-held control device 12 such that it follows the movements of the control device 12, and a second coordinate system X₂,Y₂,Z₂ is defined fixed to the manipulator 16. The movements of different parts of the manipulator are then defined in the second coordinate system X₂,Y₂,Z₂. Further, the movements of the manual input unit 22 are defined in the first coordinate system X₁, Y₁, Z₁.

During a manual movement task the operator 11 can move the manipulator 16 around in different directions and thereby the operator usually turns the hand-held control device 12 in different directions. The operator 11 thereby causes a reorientation of the first coordinate system X₁, Y₁, Z₁ relative the second coordinate system X₂, Y₂, Z₂, because the first coordinate system X₁, Y₁, Z₁ is defined relative to the control device 12.

To determine this reorientation the hand-held control device 12 comprises a determining unit 24. The determining unit 24 is adapted to determine the relative orientation between the first X₁,Y₁,Z₁ and the second coordinate system X₂,Y₂,Z₂, that is how the first coordinate system X₁,Y₁,Z₁ has been displaced or rotated relative the second coordinate system X₂,Y₂,Z₂. The hand-held control device further comprises a calculating unit 26 adapted to repeatedly update the first coordinate system such that each axis of the first coordinate system X₁, Y₁, Z₁ corresponds to a matching axis X₂,Y₂,Z₂ in the second coordinate system X₂,Y₂,Z₂. This is done by calculating the transformation from the first coordinate system X₁,Y₁,Z₁ to the second coordinate system X₂,Y₂,Z₂ and applying this transformation to every movement of the hand-held control device measured in the first coordinate system X₁,Y₁,Z₁. For instance, calculating the transformation between the first coordinate system X₁, Y₁, Z₁ and the second coordinate system X₂, Y₂, Z₂ includes determining a homogenous transformation matrix. The transformation includes information on the rotation and the translation between the coordinate systems.

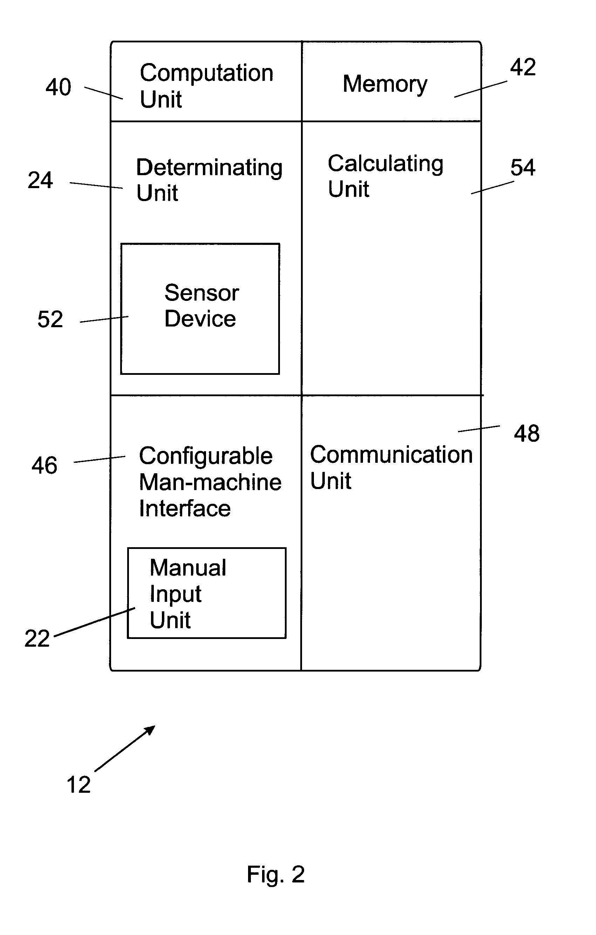

Figure 2 shows a simplified block diagram of the hand-held control device 12, more in detail. The hand-held control device 12 is interacting with the control system 18 for manually manipulating or programming a robot 10.

The hand-held control device 12 comprises at least a computation unit 40, for instance a processor or a logic programmable unit, memory means 42 for storing coordinates of the manual input unit 22 and in at least one embodiment also the coordinates of the orientation of the hand-held control device 12, and a configurable man-machine interface 46. The configurable interface 46 is connected to the manual input unit 22 for controlling the movement of the robot. The configurable man-machine interface 46 is used for entering commands to the hand-held control device 12. The hand-held control device 12 further comprises a communicating unit 48, for instance a wireless communicating means or other means for communicating with the control system 18.

As described above the movements of the manual input unit 22 are defined in a first coordinate system X₁,Y₁,Z₁, defined relative to the control device 12 such that the first coordinate system follows the movements of the control device 12 and a second coordinate system is defined fixed to the robot. The hand-held control device 12 further comprises a determining unit 24 for determining the relative orientation between the first X₁,Y₁,Z₁ and the second coordinate system X₂,Y₂,Z₂. The determining unit 24, for instance, comprises a sensor device 52 for sensing the orientation of the first coordinate system X₁,Y₁,Z₁ in, for instance, three degrees of freedom. Typically the sensor device 52 senses small movements, such as less then 0,01 mm. The sensor device 52 may also sense the orientation of the first coordinate system in one, two or three degrees of freedom. The input unit 22 is arranged to detect user input in four, five or six degrees of freedom. The sensor device 52 is then, for instance, an inertial navigation device such as an inertial tracker. The determining unit 24 is adapted to determine the relative orientation between the first and the second coordinate system based on orientation measurements from said sensor device 52 and the fixed orientation of the second coordinate system. Other types of determination units 24 are also possible, for instance vision methods or local GPS.

The hand-held control device 12 further comprises a calculating unit 54 adapted to repeatedly update the first coordinate system such that each axis of the first coordinate system corresponds to a matching axis in the second coordinate system. The calculating unit may also be located in an external computer means 20 such as a control unit.

The manual input unit 22 is arranged to detect user input in at least five degrees of freedom. To manipulate a manipulator 16 into a preferred position, the operator uses the input device to choose a movement command. The communication means then sends the input command to the control system 18 and the control system sends the corresponding movement commands to the manipulator 16. Although the embodiment discloses a space ball the manual input unit 22 can be any kind of man-machine interface. In other embodiments any movable manual input unit 22 can be used such as an intelligent joystick, a space ball/mouse, a touch screen means, key button means or cordless communication means or even a personal computer (PC).

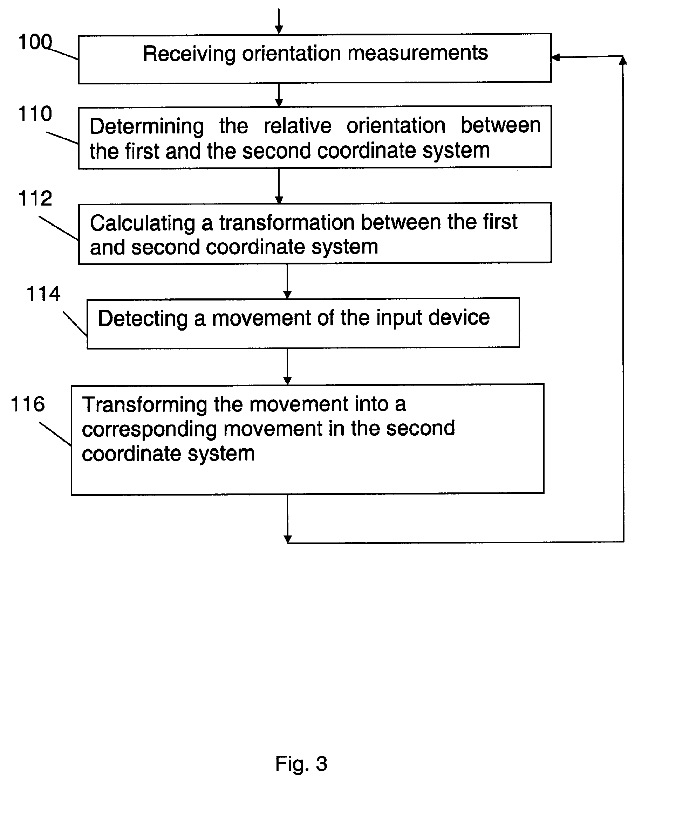

Figure 3 shows a simplified flowchart for carrying out a method for manually control an industrial robot according to an embodiment of the invention. The method then repeatedly performs the steps describe in following paragraph.

A measurement of the orientation of the first coordinate system (X₁,Y₁,Z₁) is received from the sensor 52, block 100. The relative orientation between the first and the second coordinate system is determined, block 110, based on the received orientation measurement from the sensor device. In practice a home position with a known orientation relative the second coordinate system is defined. After a homing is performed, the sensor 52 measures the reorientation in relation to the home position. Thereafter, the transformation between the first and second coordinate system is calculated, block 112, based on the relative orientation between the coordinate systems. For example, the calculation of the transformation between the first and second coordinate system includes determining a transformation matrix for the first coordinate system, determining a transformation matrix for the second coordinate system, and determining a transformation matrix between the coordinate systems based on the transformation matrixes for the first and second coordinate system and the relative orientation between the coordinate systems. When a movement of the manual input unit is detected, block 114, the movement is transformed into a corresponding movement in the second coordinate system, block 116, based on the calculated transformation matrix between the coordinate systems. In practice, it is only the direction of the movement that is transformed into the second coordinate system. For example, the transformation of the movement is carried out by multiplying the direction of the movement with the transformation matrix between the coordinate systems.

In a physical implementation of the invention, the operator uses for instance: a logic unit or computing unit such as a tablet personal computer PC, a wearable computer, a TPU, and, for instance, with wireless access to information via General Packet Radio Service (GPRS), WLAN, Bluetooth or other. The TPU device, for instance, comprises an inertial tracker and a space ball or a joystick.

The logic unit or computing unit comprises a microprocessor, or processors comprising a central processing unit (CPU) or a field-programmable gate array (FPGA) or any semiconductor device containing programmable logic components and programmable interconnects performing the steps of the method according to an aspect of the invention. This is performed with the aid of one or more computer programs, which are stored at least in part in memory accessible by the computing unit. It is to be understood that the computer programs may also be run on one or more general-purpose industrial microprocessors or computers instead of a specially adapted computer.

The computer program comprises computer program code elements or software code portions that make the computer perform the method using equations, algorithms, data and calculations previously described. A part of the program may be stored in a processor as above, but also in an ROM, RAM, PROM, EPROM or EEPROM chip or similar memory means. The program in part or in whole may also be stored on, or in, another suitable computer-readable medium such as a magnetic disc, CD-ROM or DVD disk, hard disk, magneto-optical disk, CD-ROM or DVD disk, hard disk, magneto-optical memory storage means, in volatile memory, in flash memory, as firmware, or stored on a data server. Removable memory media such as removable hard drives, bubble memory devices, flash memory devices and commercially available proprietary removable media such as the Sony memory stick and memory cards for digital cameras, video cameras and the like may also be used. The computer programs described may also be arranged in part as a distributed application capable of running on several computers or computer systems at more or less the same time.

The computer programs described may also be arranged in part as a distributed application capable of running on several different computers or computer systems at more or less the same time.

This invention is applicable to all industrial areas where angular rotational determining systems are mandated and other areas where introducing hand-held control units for manipulating manipulators are under discussion. It will be understood by those skilled in the art that various modifications and changes may be made to the present invention without departure from the scope thereof, which is defined by the appended claims.

## Claims

1. A hand-held control device (12) for an industrial robot (10), comprising a manual input unit (22) for controlling the movement of the robot such that the movement of the robot corresponds to the movement of the input unit, wherein a first coordinate system (X₁,Y₁,Z₁) is defined relative to the control device such that it follows the movement of the control device, and a second coordinate system (X₂, Y₂, Z₂) is defined fixed to the robot, and the movements of the manual input unit are measured in the first coordinate system, **characterized in that** the device further comprises a determining unit (24) for determining the relative orientation between the first and the second coordinate system, and a calculating unit adapted to calculate the transformation between the first and second coordinate system based on the relative orientation between the coordinate systems, and to transform the movements of the manual input unit into corresponding movements in the second coordinate system based on said calculated transformation.

2. A hand-held control device (12) according to claim 1, **characterized in that** said determining unit (24) comprises a sensor device (52) for sensing the orientation of the first coordinate system (X₁,Y₁,Z₁) in at least two degrees of freedom.

3. A hand-held control device (12) according to claim 1, **characterized in that** said determining unit (24) comprises a sensor device (52) for sensing the orientation of the first coordinate system (X₁,Y₁,Z₁) in three degrees of freedom.

4. A hand-held control device (12) according to any of claims 2-3, **characterized in that** said sensor device (52) is an inertial navigation device.

5. A hand-held control device (12) according to any of claims 2-4, **characterized in that** said determining unit (24) is adapted to determine the relative orientation between the first (X₁,Y₁,Z₁) and the second coordinate system (X₂,Y₂,Z₂) based on orientation measurements from said sensor device (52).

6. A hand-held control device (12) according to any of claims 1-5, **characterized in that** said input unit (22) is arranged to detect user input in at least five degrees of freedom.

7. A hand-held control device (12) according to any of claims 1-6, **characterized in that** said input unit (22) is a space ball arranged to detect user input in six degrees of freedom.

8. A method for manually control an industrial robot (10), comprising a control device (12) having a manual input unit (22) for controlling the movement of the robot such that the movements of the robot correspond to the movement of the input unit, wherein a first coordinate system (X₁,Y₁,Z₁) is defined relative to the control device such that it follows the movements of the control device, and a second coordinate system (X₂, Y₂, Z₂) is defined fixed to the robot, and the movements of the manual input unit are measured in the first coordinate system, **characterized in that** the method repeatedly performs the steps of:
- determining the relative orientation between the first and the second coordinate system,
- calculating the transformation between the first and second coordinate system based on the relative orientation between the coordinate systems, and
- transforming the movements of the manual input unit into corresponding movements in the second coordinate system based on said calculated transformation.

9. A method according to claim 8, wherein the method comprises:
- sensing the orientation of the first coordinate system (X₁,Y₁,Z₁) in at least two degrees of freedom and based thereon determining said relative orientation.

10. A method according to claim 8, wherein the method comprises:
- sensing the orientation of the first coordinate system (X₁,Y₁,Z₁) in three degrees of freedom and based thereon determining said relative orientation.

11. A method according to any of claims 8-10, wherein the method comprises:
- detecting user input in at least five degrees of freedom.

12. A method according to any of claims 8-10, wherein the method comprises:
- detecting user input in six degrees of freedom.
